# EUROPEAN PATENT SPECIFICATION

(11) **EP 0 528 788 B1**
(45) Date of publication and mention of the grant of the patent: **23.07.1997**
(21) Application number: 90907575.6
(22) Date of filing: 11.05.1990
(51) Int. Cl.: B29C 70/02, A47K 3/00, B29C 70/08

(54) **POLYESTER BACKED ACRYLIC COMPOSITE MOLDED STRUCTURE**
GEFORMTE UND MIT POLYESTER BESCHICHTETE ACRYLKOMPOSITSTRUKTUR
STRUCTURE MOULEE COMPOSITE EN ACRYLIQUE AVEC RENFORCEMENT DE POLYESTER

(30) Priority: 30.04.1990 US 516284
(43) Date of publication of application: 03.03.1993
(73) Proprietor: AMERICAN STANDARD INC., Piscataway, New Jersey 08855-6820 (US)
(72) Inventor: KUSZAJ, Karl, T., East Brunswick, NJ 08816 (US); BARNDT, Ronald, D., Tatamy, PA 18085 (US); WILLIS, Jeffery, E., Lawrenceville, NJ 08648 (US)
(74) Representative: VOSSIUS & PARTNER
(86) International application number: US9002672
(87) International publication number: WO9117040

(56) References cited:
- EP-A- 0 002 953
- GB-A- 843 863
- GB-A- 2 087 295
- US-A- 3 582 388
- US-A- 3 707 434
- US-A- 3 720 540
- US-A- 4 082 882
- US-A- 4 664 982
- US-A- 4 844 944

## Description

This invention relates to a polyester backed acrylic composite molded structure. More particularly, it relates to a composite structure having a polyester polymeric backing material applied during a molding process to an acrylic shell for manufacturing of lightweight durable articles such as sanitary fixtures including bathtubs, sinks, shower receptors, lavatories and the like which are a lightweight, and resist damage and delamination when subjected to impact, the weight of the user and thermal shock.

In the development of bathroom and kitchen fixtures, as well as bathtubs, whirlpool tubs and other composite articles, the traditional porcelain-cast iron fixtures have gradually been replaced by lighter and more resilient composite structures. One of the difficulties with the porcelain-cast iron and enameled fixtures has been their susceptibility impact damage and extreme weight which causes great difficulties in moving and installing large fixtures such as sinks, bathtubs and whirlpool tubs. The porcelain-cast iron and enameled fixtures did have the advantage of having a very solid feel and a high weight bearing capability.

Initial attempts by the industry to replace these porcelain-cast iron fixtures proved difficult. The early composite structures had a plastic, hollow feel and would deform, crack, chip or delaminate when subjected to impact, thermal shock, or the weight of the typical bather. Also, these composite structures would often delaminate, crack, craze or chip when subjected to impact from the outside of the structure during manufacturing, transportation and installation of the fixture.

GB-A-2 087 295 relates to a method of making a shell-like receptacle, such as a bath, vanity basin or shower tray, comprising the steps of forming an inner liner of a synthetic plastics material; placing the liner on a first part of a mould with its reverse side exposed; applying a controlled layer of glass fibre over this reverse side; closing the mould by bringing a second part into co-operation with the first part, with the glass fibre occupying a space between this second part and the liner; adding synthetic resin and catalyst into said space to permeate the glass fibre; and curing the resin and subsequently removing the now reinforced liner from the mould. Alternatively, a controlled quantity of resin and catalyst can be added to the exposed side of the liner before closing the coated liner in the mould by bringing a second part into co-operation with the first part.

A further successful solution to these problems is disclosed in U.S. Patent No. 4,664,982 to Genovese et al., and in U.S. Patent Application Serial No. 07/400,289 to Kuszaj et al., the disclosure of both of these documents are incorporated by reference herein. Both disclose composite enamelled steel or stainless steel fixtures which have the look and feel of the earlier porcelain-cast iron fixtures. The structures are light, have high structural strength, and resist delamination, chipping and denting due to impact or thermal shock. The composite structures are formed from a steel or stainless steel which may be enamelled on one or both of its faces. The excellent physical and mechanical properties are imparted to these shells as a result of the chemical bonding of a plastic layer to a non-finish side of the shell. The preferred plastic layer is an isocyanate-modified thermosetting unsaturated polyester or polyether foam which is introduced into a mold containing the shell by Reaction Injection Molding (RIM), or by reinforced reaction injection molding ("RRIM") processing. The foamed plastic is chemically bonded to the shell by the action of silane, a coupling agent which creates chemical linkages between the metallic groups or the SiOH groups in the enamel and the reinforced foamed plastic to form the laminate. These composite structures possess excellent physical and mechanical properties as a result of the chemical bonding of the reinforced foamed polymeric layer to the enamel steel or stainless steel shell. These disclosures do not relate, however, to the manufacture of a composite structure in which an acrylic layer is bonded to a polymeric or plastic molded structure. Additionally, these reaction molding processes are carried out under high pressures and require a large and expensive hydraulic press to keep the mold closed and prevent the escape of the reacting polymeric foam during the molding process. Although these molding procedures result in a very fast cure time, the equipment required, such as the hydraulic mold press is expensive,' requiring a high capital investment.

Another solution to these problems was the use of a polymeric, cosmetic surface layer bonded directly to a foamed plastic substrate, described as a cross-linked isocyanate-modified thermosetting unsaturated polyester or polyether resin layer to provide a high impact strength, delamination-resistant structure. These structures and their process of manufacture are disclosed in U.S. Patent Nos. 4,844,944 and 4,844,955 both to Graefe et al., the disclosure of which is incorporated by reference herein. Methylmethacrylate and commercially available adhesive Thixon 416, manufactured by Whittaker Corp., West Alexandria, Ohio, which contains a blend of 65% solvents, 35% solids including polyurethane, phenolic and epoxy resins, was used as a primer to cross-link and chemically bond the polymeric cosmetic layer to the isocyanate groups in the foamed plastic while plastic is cured. The isocyanate was provided in the foamed plastic to provide a very fast cure of the plastic layer during RIM, or RRIM molding. These reaction molding processes are carried out under high pressures and require a large and expensive hydraulic press to keep the mold closed and prevent the escape of the reacting polymeric foam during the molding process. Although these molding procedures result in a very fast cure time, the equipment required, such as the hydraulic mold press is expensive, requiring a high capital investment.

Accordingly, a feature of the present invention is to provide a polyester backed acrylic composite molded structure which has a solid feel and sound of the porcelain-coated cast iron and enameled fixtures without the weight and delamination problems associated with such structures.

Another feature of the present invention is to provide a polyester backed acrylic composite molded structure which can be molded under low pressures without the need for expensive hydraulic mold press which is needed for RIM or RRIM molding.

These and other features are achieved by the present invention which provides a polymeric composite structure, preferably formed in the configuration of a bathtub and a method manufacturing such composite structure. The polymeric composite strucutre includes a polymeric shell layer, preferably made from a thermoformable acrylic polymer of polymethylmethacrylate having a finish-side and a non-finish side. A fiber reinforced resin layer which may include a layer of fibers such as fiberglass, carbon, ceramic, boron, graphite, woolastonite, aromatic polyamide and mixtures of these fibers is adhered to the non-finish side of the acrylic shell. Preferably such layers are made of chopped fiberglass in a resinous backing. A weight bearing reinforcing structure is adhered to the non-finish side of the shell and to the fiber reinforced resin layer. This weight bearing reinforcing strucutre can include wood, such as chip-board, particle-board, plywood and wooden planks or it may include a polymeric composite or inorganic weight bearing structures. Preferably, the weight bearing structure is a rectangular wooden structure made from chip-board placed below the floor portion of the bathtub. Additionally, a plurality of reinforcing wooden planks are placed below the deck portion of the shell of the tub.

Preferably, the non-finish side of the shell is bonded to the fiber reinforcing layer by a silane based coupler which is made from a silane based primer and a methylmethacrylate and solvent blend. The methylmethacrylate and solvent blend preferably includes methylene chloride, styrene and water, while the silane based primer composition suitably includes 3[2(vinyl benzylamino)ethylamino] propyltrimethoxy silane dissolved in a solution of toluene, butanol, 2-butoxy ethanol and ethyl alcohol.

The polymeric composite also includes a molded, cross-linked thermosetting polymeric backing layer which surrounds the fiber reinforcing resin layer and the weight bearing reinforcing structure. The cross-linked thermosetting polymeric layer is bonded to the non-finish side of the polymeric shell and includes at least one of the following components: polyester, epoxy, acrylic, or vinyl esters, alone or blended in combination, but does not contain isocyanate. Preferably, this cross-linked thermosetting backing, prior to curing includes a rigid unsaturated polyester resin, flexible unsaturated polyester resin, a curing promoter, a peroxide cross-linking promoter and a filler in a ratio from about 2:1 resin to filler to about a 1:30 resin to filler. The filler may include calcium carbonate, aluminum trihydrate, glass spheres, sand, ceramic, mica, talc, silica, and mixtures containing one or more of these fillers.

The polymeric composite structure, preferably formed in the shape of the bathtub, is manufatured by a process of the present invention. The manufacturing process includes forming a polymeric shell, preferably a thermoformable acrylic shell of polymethylmethacrylate, to a suitable shape such as the configuration of a bathtub. The non-finish side of the polymeric shell is preferably primed with the above-described silane based coupler. The primed (or unprimed) polymeric shell is then reinforced on its non-finish side with a resinous mixture of reinforcing fibers by suitable spray-up and roll down, or by other suitable techniques. After the reinforced shell has sufficiently cured, the shell is arranged in a mold with the non-finish side covering a weight bearing reinforcing structure, such as chip-board, placed below the weight bearing portion of the shell, for instance, the floor of the tub. Other reinforcing structures such as wooden boards may be placed below the deck of the shell. An uncured mixture of unsaturated thermosetting polymeric backing material and cross-linking promoter, as described above, is injected into the mold at a sufficient pressure to force the backing material to coat the non-finish side of the shell and cover the fiber reinforcing material and the weight bearing reinforcing structures. The molded thermosetting polymeric backing material is cured at suitable temperatures and for a sufficient time to allow hardening and cross-linking of the thermosetting material and bonding of the fiber reinforcing layer structural reinforcing non-finish side of the shell. After sufficient curing, the composite structure is removed from the mold for trimming.

In an alternative embodiment of this manufacturing process, the polymeric shell, preferably primed is arranged in the molding cavity with the non-finish side covering a fiberous reinforcement, such as a fiberglass or other fiberous mat. An additional fiberglass mat may be, preferably, placed between the weight bearing reinforcing structure, such as the chip-board, and the floor of the bathtub. The thermosetting polymeric material is injected into the mold, coating the non-finish side of the shell and embedding the fiberous mat and the weight bearing board to bond these reinforcing and weight bearing materials to the non-finish side of the shell. It is also contemplated that the fiberous reinforcing material such as fiberglass mat may be inserted as a preformed fiberous structure made by a thermoforming process, or the spray-up of fiberglass and resin onto a suitably shaped screen.

For better understanding of the present invention, the scope of which is pointed out in the appended claims, reference is made to the following description, taken in conjunction with the figures.
Figure 1 is a schematic partial perspective cross-sectional view illustrating the preferred polyester backed acrylic composite bathtub of the present invention.
Figure 2 is a schematic flow chart illustrating the low pressure resin transfer molding apparatus used to carry out the molding process of the present invention.
Figure 3 is a top perspective view of the preferred molding receptacle in accordance with the present invention.
Figure 4 is a perspective view of the mold according to the present invention shown in the open position, illustrating the molding receptacle, shell support and mold closing means of the present invention.
Figure 5A shows the non-finish side of the acrylic shell of the present invention; and
Figure 5B shows the non-finish side of the acrylic shell of the present invention after the application of fiberglass spray-up reinforcement.
Figure 6 shows the freshly demolded polyester backed acrylic composite bathtub of the present invention positioned on a trimming table with a horizontally oriented circular saw for trimming excess polyester backing produced during the molding process, shown with blind bolts in place.
Figures 7A, 7B and 7C are orthogonal views of the trimmed polyester backed acrylic composite bathtub of the present invention, shown without the blind bolts in place.

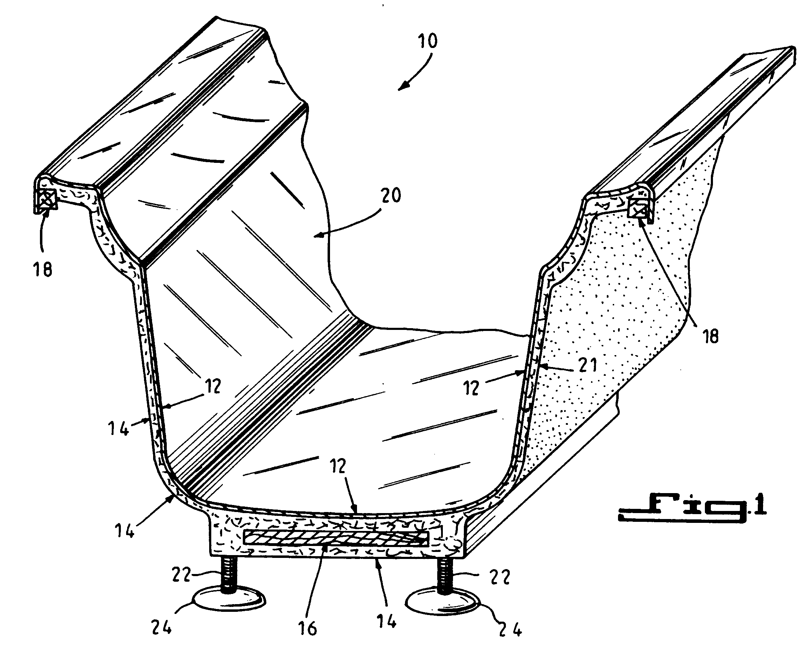

The polyester backed acrylic composite molded structure according to the present invention, preferably molded in the configuration of a bathtub 10 is illustrated in Figure 1. Bathtub 10 includes a polymeric shell, preferably a thermoformable shell, most preferably an acrylic shell 12 having a polished finish side 20 which is normally exposed to the user. The shell 12 also includes a non-finish side 21 which is bonded to molded thermosetting polymeric backing which does not contain isocyonate, preferably a blended polyester backing material 14. Additionally a fiberglass, graphite fiber, carbon fiber, boron fiber, ceramic fiber, woolastonite fiber, aromatic polyamide fiber or similar reinforcing material (not shown) is preferably attached by spray-up prior to molding. Alternatively, the fiber reinforcing material is molded to the acrylic shell 12 by the polyester backing material 14 during the molding process. A floor reinforcing means 16 preferably made of chip-board, particle-board or plywood is molded into the polyester backing 14 below the acrylic shell 12 under the floor of the bathtub 10. Preferably, deck supporting means 18, such as wooden boards are molded under the deck area of the acrylic shell 12 within the polyester backing 14. In an especially preferred embodiment blind bolts 22 are placed, after the molding process has been completed, through a portion of the molded polyester backing material 14 and into the floor reinforcing means 16. Feet 24 are attached to the blind bolts 22 for supporting the weight of the tub, user and water during bathing.

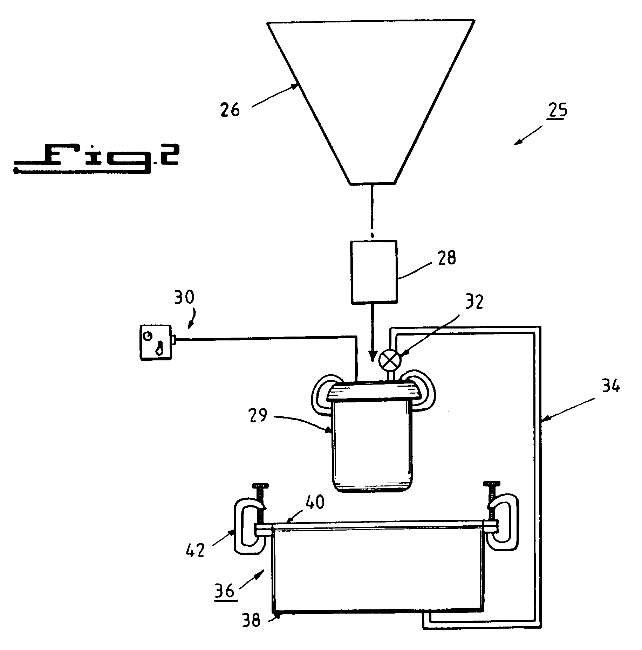

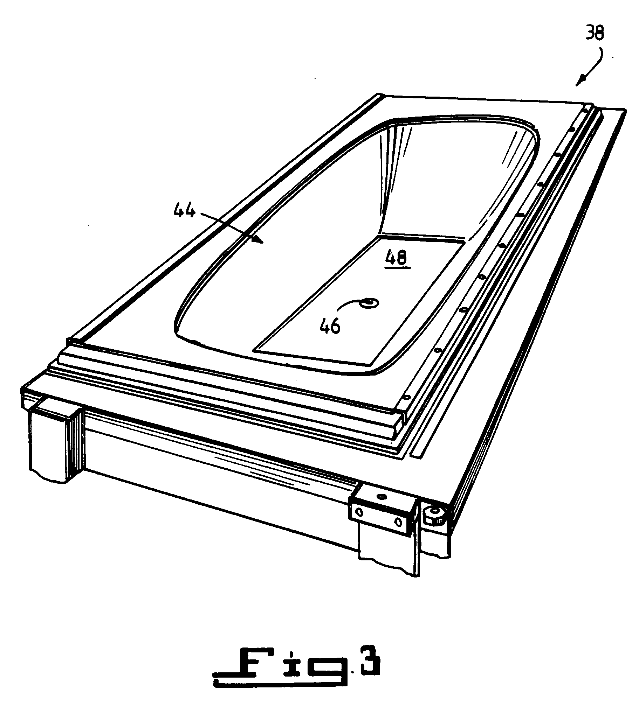

A schematic flow chart illustrating the preferred low pressure resin transfer molding (LPRTM) apparatus 25 suitable for carrying out the molding process of the present invention is shown in Figure 2. The molding apparatus 25 includes a mixer 26, such as a 110 gallon capacity NAUTA mixer manufactured by Daymixing Corp., Cincinnati, Ohio. The uncured, mixed polyester and filler backing material is transferred from mixer 26 to a pressure pot liner 28 which suitably fits within a pressure pot 29, Model No. QM 5744 both of which are manufactured by Devilbiss Corp., Toledo, Ohio. After the addition of cross-linking promoter, the pressure pot 29 is closed and compressed air 30 is pumped into the pressure pot 29. Once pressure pot 29 is sufficiently charged, throttle valve 32 is opened allowing the compressed air to force the uncured polyester and filler mixture through polymer delivery hose 34 and into the mold 36. Preferably polymer delivery hose 34 is a flexible PVC hose having a one (1") inch diameter which is disposed of and replaced following the molding process. Mold 36 preferably includes a molding receptacle 38, shown in Figure 3 made from cast aluminum having a cavity for receiving the acrylic shell 12, leaving a molding space between the non-finish side 21 of acrylic shell 12 and an interior face 44 of the molding receptacle 38.

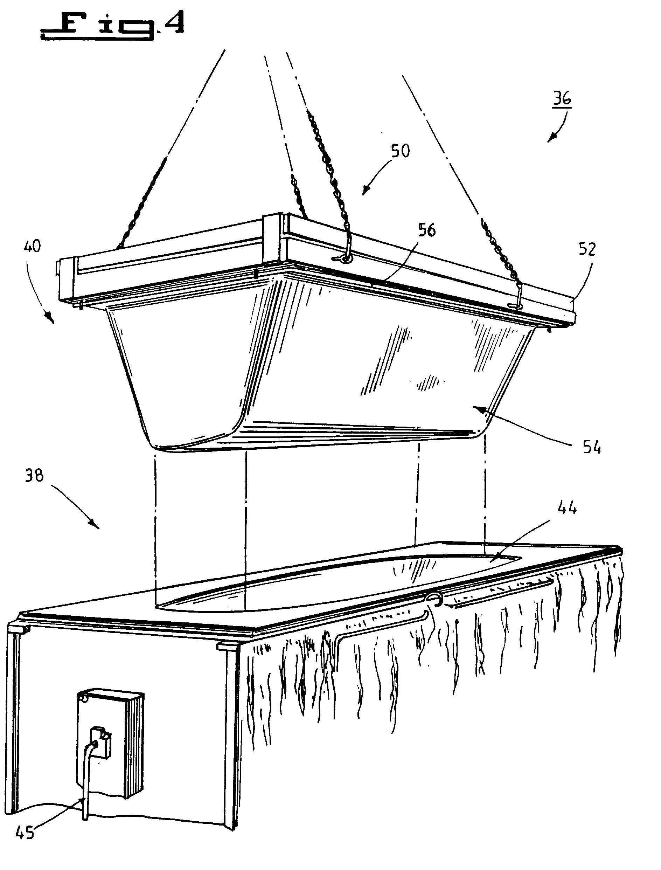

As illustrated in Figure 3, molding receptacle 38 is preferably made from a good heat dissipating material, such as cast aluminum and has a relatively smooth interior face 44 for forming the shape of the polyester backing 14. Preferably, molding receptacle 38 also includes a water jacket 45 or other temperature regulating means for maintaining the mold 36 at a desired temperature (see Figure 4). The uncured polyester backing and filler mixture is introduced into the molding receptacle from polymer delivery hose 34 into a molding aperture 46 which is located approximately in the geometric center of a portion of the molding receptacle 38 for molding the tub floor. As shown in Figure 3, the interior face 44 of the molding receptacle 38 includes a rectangular indentation 48 of suitable dimension to retain a tub floor reinforcement 16, preferably a rectangular piece of chip-board, or alternatively particle-board, plywood, wooden plank, fiberboard or a composite, plastic, fiberglass or other suitable weight bearing structural reinforcing material. The molding receptacle may suitably also include positioners or slots (not shown) for retaining deck supports 18, which preferably include wooden reinforcing 1" by 1" boards illustrated in Figure 1.

Due to the low pressure molding process utilized in the present invention, mold seals are not required, and in fact may impede the flow of the uncured polyester resin and filler mix into the cavity formed between the non-finish side 21 of the acrylic shell 12 and the interior face 40 of the molding receptacle 38. Due to the absence of mold seals, there is some spillover of polyester backing material 14 and adherence of the hardened backing material to portions of the molding receptacle 38 due to the molding and curing process. Accordingly, hydraulic lifters are not ordinarily utilized. Rather, after the polyester backing 14 is sufficiently cured the molded tub is loosened or cut from the molding receptacle 38 and removed by hand.

The mold 36 also includes a shell support and mold closing means 40 which maintains the shape of the thin acrylic shell 12 during the molding process, and holds the acrylic shell in proper orientation within the molding receptacle 38. The mold may be kept closed by any suitable means, however, due to the low molding and curing pressures, an expensive hydraulic mold press which is required in RIM and RRIM molding, although useful, is not required. Rather four C clamps 42, rated at 500 lbs. each, are entirely satisfactory for keeping mold 36 closed during the molding and curing process.

The mold 36 as viewed in the open position is illustrated in greater detail in Figure 4, showing the molding receptacle 38, and shell support and mold closing means 40 suitably held above the molding receptacle by a mold opening and lifting means, such as a chain hoist 50. As well known by those skilled in the art other mold opening and closing means such as a pivoting or levered systems, electro-mechanical or hydraulic mold clamps may be suitably utilized to carry out the molding process of the present invention instead of the chain hoist 50 and clamps 42.

The shell support and mold closing means 40 shown in Fig. 4 is typically made of a cast aluminum core 52 which is coated with a urethane skin 54 which matches the shape and supports the finish side 20 of the acrylic shell 12, without scratching or otherwise damaging the polished finish. Teflon strips 56, or other non-abrasive materials are included around the periphery of the urethane skin 52 for contacting and urging a deck portion of the shell 12 towards the molding receptacle 38 during the molding process without causing damage to the finish side 22 of deck portion of shell 12. A detailed description of other suitable molding apparatus which may be adapted for use with the present invention is described in the commonly assigned co-pending U.S. Patent Application Serial No. 07/467,384 filed January 19, 1990 the disclosure of which is incorporated by reference herein.

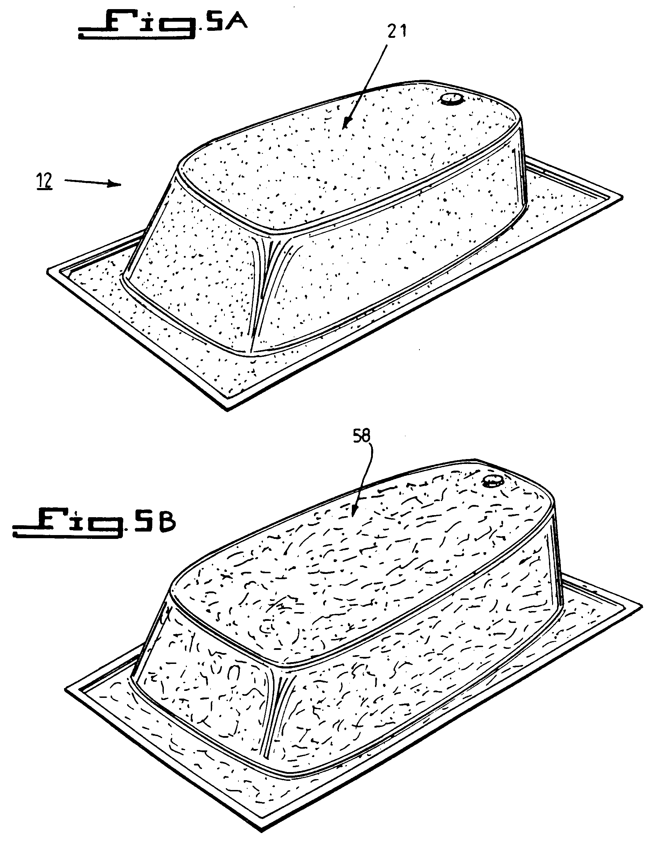

In accordance with the process of the present invention acrylic shell 12 is formed from a cell cast acrylic sheet preferably made from polymethylmethacrylate which has a highly polished finish side and a non-finish side. The shell preferably has a thickness of approximately 3.2 millimeters. The acrylic sheet may be made from other materials such as those described in United States Patent Nos. 4,844,955 and 4,844,944 the disclosure of which is incorporated by reference herein. The acrylic sheet is thermoformed using well known vacuum thermoforming apparatus into the desired shape of the acrylic shell 12 which is illustrated in Figure 5A.

The thermoformed acrylic shell 12 is preferably treated on its non-finish side 21 with a bonding primer composition. One suitable primer composition includes a silane based primer AP-134, manufactured by Lord Corp. in Erie, Pennsylvania. It contains a silane compound at a 10% concentration in a solvent of 75% toluene, 5% butanol, 5% 2-butoxy ethanol and 5% ethyl alcohol. A suitable silane compound is 3[2(vinyl benzylamino)ethylamino] propyltrimethoxy silane at a preferred 10% concentration, although the concentration of this silane compound may range from about 1% to about 20%, preferably from about 5% to about 15%. The silane primer AP-134 is most preferably mixed at a 1% concentration by weight with 1% water, 9.8% styrene, 29.4% methylene chloride and 58.8% methylmethacrylate. The concentration of these components may range from about 0.1% to 10%, preferably from about 0.5% to about 2% silane primer such as AP-134; from about 0.1% to about 10%, preferably from about 0.5% to about 2.0% water; from about 0.1% to about 98%, preferably from about 5% to about 15%, styrene; from about 2.5% to about 98%, preferably from about 25% to about 35% methylene chloride; and from about 98% to about 5%, preferably from about 70% to about 40% methylmethacrylate. This primer solution promotes cross-linking and improves bonding between the polyester reinforced backing and the non-finish side 21 of the acrylic shell. Other compositions useful as bonding primer solutions are described in the above-referenced U.S. Patent Nos. 4,844,955 and 4,844,944 to Graefe et al. The purpose of the primer is improve bonding to the acrylic shell 12 allowing for faster demolding times. However, if the demolding times are increased, or if sufficient bonding occurs during the spray up reinforcing step, the bonding primer is not required.

The thermoformed and preferably primed acrylic shell is reinforced with a resinous mixture of fiberous material, including chopped fiberglass, ceramic fibers, boron fibers, graphite or carbon fibers, woolastonite fibers, or aromatic polyamide fibers. Preferably, the reinforcing materials include a sprayed on and rolled out mixture of chopped fiberglass from about 10% to about 40%, preferably from about 15% to about 35%, and most preferably about 30% by weight; and polyester resin from about 60% to about 90%, preferably from about 85% to about 75%, and most preferably about 70% by weight. The sprayed on fiberglass is typically designated as fiberglass reinforced plastic (FRP) or glass reinforced plastic (GRP). The polyester resin preferably includes a mixture of a rigid unsaturated polyester resin and styrene monomer designated 31-439 by the Reichold Corp.; and may also include a flexible unsaturated resin designated 97-088 by Reichold Corp. and a styrene monomer. The polyester resin is combined with a curing or cross-linking promoter containing from about 0.01% to about 1%, preferably from about 0.05% to about 0.5%, most preferably about 0.2% cobalt naphthanate; and from about 0.1% to about 5%, preferably from about 0.5 to about 3%, most preferably about 1% methyl ethyl ketone peroxide, percentages based on weight of resin only. The resin and chopped fiberglass mixture is typically applied by suitable spray equipment such as Venus Model HI SSCW 2100 manufactured by Venus-Gusmer Corp., Kent, Washington. After curing for approximately one hour, the reinforced acrylic shell 58 illustrated in Figure 5B is placed in the molding receptacle 38 with reinforcing weight bearing structures 16 and 18 placed below the tub floor and deck regions, respectively.

In an alternative embodiment, the acrylic shell 12, preferably primed as described above, is reinforced with a matted or woven fiberous reinforcing material, as described above, preferably a 1 & 1/2 ounce (per square foot) fiberglass mat. The fiberous reinforcing material is placed inside the molding receptacle, preferably below the weight bearing floor supporting board 16, and another fiber reinforcing mat is placed above the reinforcing board 16 and below the floor of shell 12. The fiberglass or similar mat of fiberous reinforcing material is adhered to the acrylic shell 12 during the molding step. A further alternative is that the fiberous reinforcing material is preformed prior to the molding step and placed as a single unit inside the molding receptacle 38 prior to the placement of the reinforcing board 16 and acrylic shell 12 within the molding receptacle 38. Preforming of the fiberglass reinforcing material may be obtained using thermoformable fiberglass and plastic composite or similar fibrorous composite which is shaped using thermoforming techniques which are well known to those skilled in the art. Alternatively, preforming may be accomplished by spray-up of a resinous mixture of chopped fiberglass or other fibers onto a shaped mesh or screen by known techniques.

After the acrylic shell has been suitably arranged within the molding receptacle, the mold 36 is closed by placing the urethane coated surface 54 and TEFLON strips 56 of the shell support and mold closing means 40 in suitable contact with the finish-side 21 of the acrylic shell 12. The mold is suitably clamped to provide sufficient venting by four heavy duty C clamps 42 to secure the shell support and mold closing means to the molding receptacle 38. After the mold has been secured and properly vented, the temperature of the mold is stabilized between 100° and 120° F using a water jacket 45 in the molding receptacle 38.

The low pressure resin transfer molding (LPRTM) process suitable for the present invention is described below, however, other low pressure injection, gravity casting or displacement molding processes may also be suitably adapted for use in the present invention. The preferred resin, filler and catalyst formulation is described below.

Typically, approximately 100 lbs. of material is mixed in mixer 26, thus the percentages are based on weight. The most preferred polyester resin and filler formulation includes rigid unsaturated polyester resin and styrene monomer, sold under the name Reichhold 31-439, 35.20%; flexible unsaturated polyester resin and styrene monomer sold under the name Reichhold 97-088, 11.90%; styrene monomer, 2.48%; calcium carbonate (filler), sold under the name Vicron 15-15, 49.6%; dimethylparatoluidene (DMPT) (activator/promoter), 0.6%; benzoyl peroxide, sold under the name Cadox 40 E (40% benzoyl peroxide solution), 0.76%. Suitable ranges of this preferred combination of materials include from about 0% to about 98%, preferably from about 25% to about 45% Reichhold 31-439; from about 98% to about 0%, preferably from about 20% to about 5% Reichhold 97-088; from about 0% to about 40%, preferably from about 1% to about 10% styrene; from about 0% to about 75% , preferably from about 40% to about 60% Vicron 15-15; from about 0.05% to about 5%, preferably from about 0.2% to about 1% DMPT; and from about 0.05% to about 5%, preferably from about 0.2% to about 2% Cadox 40E.

Depending on the type of filler used, the ratio of resin to filler may range from no filler at all, or it may be as high as 1:30, depending upon the filler particle size. Preferably the ratio of resin to filler may be from about 2:1 to about 1:3. Other fillers may be added in addition to or instead of calcium carbonate, including aluminum trihydrate, glass spheres, sand, ceramic, mica, talc, silica and other suitable filling materials. Various other fillers are described in U.S. Patent Nos. 4,844,955 and 4,844,944 to Graefe et al. which are incorporated by reference herein. The preferred polyester resin mixture is not foamed, although foaming agents may be utilized to decrese the weight of the molded composite article. Additionally, other polyester blends may be used with additional fillers, foaming agents and other catalysts without departing from the scope of the present invention, as long as these resin and catalyst formulations have a sufficiently long cure time to allow low pressure molding of the molded article of present invention. The use of isocyanate in the resin system is undesirable since such compounds speed up the curing process to such an extent that high pressure and high speed molding processes would be needed, such as RIM or RRIM, requiring use of the expensive RRIM or RIM high pressure molding apparatus.

Other suitable thermosetting polymeric materials can include epoxy, acrylic and vinyl esters and blends thereof which do not contain isocyanate. Additional useful resin compositions suitable for the present invention are also described in the aforementioned U.S. Patent Nos. 4,844,944 and 4,844,955 to Graefe et al.

In preparing the preferred polyester resin of the present invention, the rigid unsaturated polyester and flexible unsaturated polyester resins are mixed in mixer 26 and the styrene monomer is then added. DMPT is also added and thoroughly mixed, and the filler material, such as calcium carbonate is then mixed typically for about 45 to 1 & 1/2 hours. One hundred (100) pounds of the material is then dispensed into the lined pressure pot 29. Approximately 3/4 pounds of benzoyl peroxide (CADOX 40E) cross-linking promoter is added and mixed for about one minute. The pressure pot 29 is closed and pressurized by compressed air source 30 to about 5 psi. Throttle valve 32 is opened and the air pressure to the pressure pot 29 is increased to about 10 psi. The air pressure is continuously increased by approximately 5 psi at one minute intervals up to a pressure of from about 20 to about 25 psi, the pressure is maintained for about 5 to 8 minutes until the mold is filled. After the mold is filled and some resin mixture spills, the throttle valve is closed and the clamps are tightened to seal the mold. The molded article is then cured. Curing time after the mold is filled for the above-described mixture is approximately for about 2 minutes to about 22 minutes, preferably from about 2 minutes to about 6 minutes, but it may be maintained in the mold for longer times. If the silane based primer is not utilized, curing may range from about forty-five (45) minutes to about 8 or more hours when cured overnight. The longer cure times allow a stronger bond to be formed between the polyester resin and the non-finish side 21 of the acrylic shell. After curing has been completed, the mold 36 is opened and the shell support mold closing means is removed. Any overflow of hardened polyester resin adhering to the outside of the molding receptacle 38 is cut away and the molded bathtub 10 is removed by hand from the molding receptacle 38.

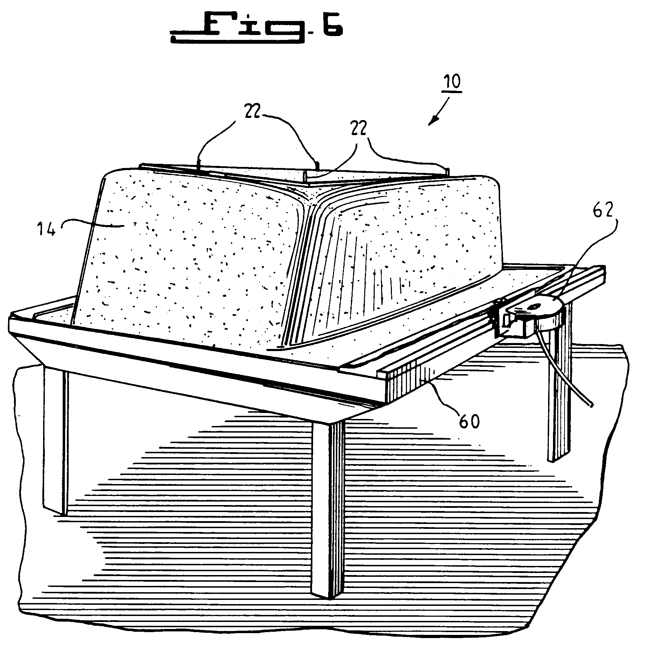

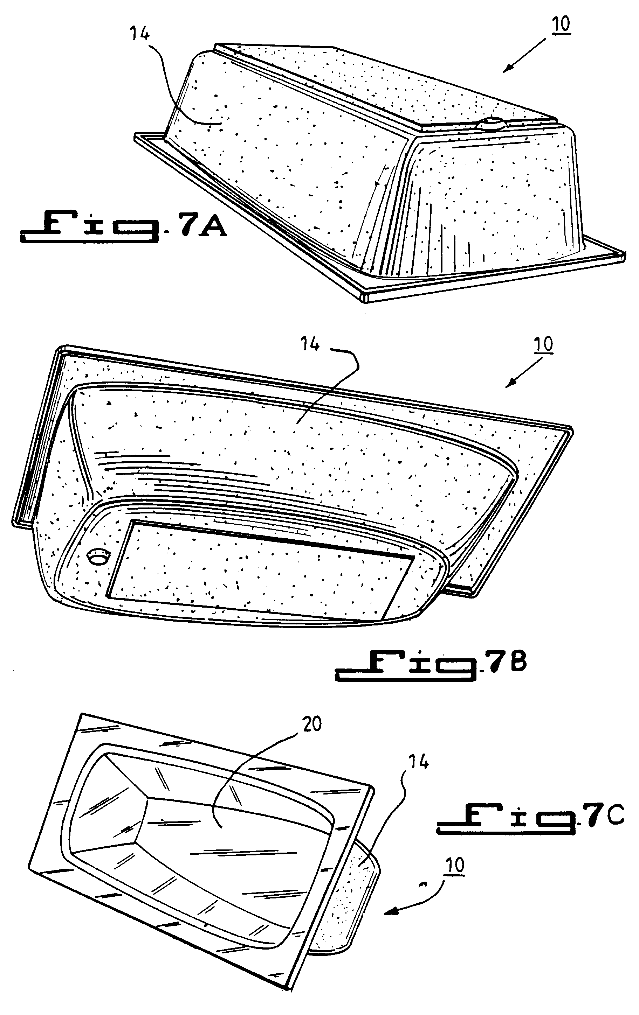

The freshly demolded bathtub 10 is trimmed of excess polyester hardened backing material 14 using suitable equipment. Suitable trimming equipment may include the trimming table 60 and horizontally mounted circular saw 62 shown in Figure 6. The finished polyester backed composite bathtub 10 of the present invention is shown in Figure 7A through 7C. Blind Bolts 22 and feet 24, illustrated in Figures 1 and 6 are inserted on the bottom surface of the bathtub through the molded polyester backing 14 and into floor reinforcing board 16.

In a preferred embodiment of the present invention the acrylic shell 12 has a thickness of about 3.2 millimeters while the fiber reinforcement is typically from about 1.0 to 2.0 millimeters measured from the non-finish side 21 of the shell. Typically the total thickness of the molded bathtub is about 8 to 10 millimeters in the side wall region and 20-25 millimeters on the floor region. The total thickness of the deck region may range from about 5 millimeters to about 35 millimeters, preferably from about 8 millimeters to about 30 millimeters. The thickness of the polyester molded material in the walls is typically from about 4.4 to about 7 millimeters. The preferred tub floor support weight bearing reinforcing structure is typically made from chip-board, particle-board, plywood or wooden plank having a preferred thickness of about 7/16 inches, but may range from about 1/4 inch to about 1/2 half of an inch in thickness, depending on the desired thickness of the floor of the molded article and its underlying backing. The preferred deck supports are typically 1 inch x 1 inch wooden boards as illustrated in Figure 1.

Thus, while we have described what are the presently contemplated preferred embodiments of the present invention, further changes and modifications may be made by those skilled in the art without departing from the scope of the invention, and it is contemplated to claim all such changes and modifications.

## Claims

1. A polymeric composite structure, comprising:
a polymeric shell layer (12) having a finish-side (20) and a non-finish side (21);
a fiber reinforced resin layer adhered to the non-finished side (21) of the polymeric shell layer (12) by a silane based coupler, and a weight bearing reinforcing structure (16) adhered to said non-finish side (21) of the polymeric shell layer (12) and to said fiber reinforced resin layer; and
a molded, cross-linked thermosetting polymeric backing layer (14), surrounding said fiber reinforced resin layer and said weight bearing reinforcing structure (16), which is bonded to said non-finish side (21) of the polymeric shell layer (12), said thermosetting polymeric backing layer (14) includes at least one component selected from the groups comprising polyester, epoxy, acrylic, vinyl esters and blends thereof, but does not contain isocyanate.

2. The polymeric composite structure as recited in claim 1, wherein said silane based coupler comprises a silane based primer composition and a methylmethacrylate and solvent blend.

3. The polymeric composite structure recited in claim 2, wherein said methylmethacrylate and solvent blend comprises methylene chloride, styrene and water; and
wherein said silane based primer composition further comprises 3[2 vinyl benzylamino)ethylamino] propyltrimethoxy silane dissolved in toluene, butanol, 2-butoxy ethanol, and ethyl alcohol.

4. The polymeric composite structure as recited in claim 1, wherein said polymeric shell layer (12) is an acrylic polymer of polymethylmethacrylate.

5. The polymeric composite structure as recited in claim 1, wherein said fiber reinforced layer comprises a layer of fibers selected from the group consisting of fiberglass, carbon, ceramic, boron, graphite, woolastonite, aromatic polyamide and mixtures thereof; and
wherein said weight bearing reinforcing structure (16) is selected from the group consisting of wood, including chip-board, particle-board, plywood, and wooden planks; polymeric composites, and inorganic weight bearing structures.

6. The polymeric composite structure as recited in claim 5, wherein said fiber reinforced layer includes fiberglass; and said weight bearing reinforcing structure (16) includes wooden reinforcing structures (18) positioned below a floor portion and a deck portion of said polymeric shell.

7. The polymeric composite structure as recited in claim 1, wherein said molded, cross-linked thermosetting backing layer (14), prior to curing comprises a rigid unsaturated polyester resin, a flexible unsaturated polyester resin, a curing promoter, a peroxide cross-linking promoter and a filler in a ratio of from about 2:1 resin to filler, up to about a ratio of 1:30 resin to filler.

8. The polymeric composite structure as recited in claim 7, wherein said filler is selected from the group consisting of calcium carbonate, aluminum trihydrate, glass spheres, sand, ceramic, mica, talc, silica, and mixtures thereof.

9. The polymeric composite structure as recited in claim 1, having the configuration of a bathtub (10).

10. A process for manufacturing a polymeric composite structure, comprising:
forming a polymeric shell (12) having a finish-side (20) and non-finish side (21) to a suitable shape; priming said non-finish side of the polymeric shell (12) with a silane based coupler;
reinforcing the non-finish side (21) of said polymeric shell (12) with a resinous mixture of reinforcing fibers;
arranging said reinforced polymeric shell (12) in a mold (36) with said non-finish side covering a weight bearing reinforcing structure (16) placed below weight bearing portions of said polymeric shell (12);
introducing an uncured mixture of unsaturated thermosetting polymeric backing material (14) and cross-linking promoter into said mold (36) at a sufficient pressure to force said backing material to coat the non-finish side of said shell (12) and cover said fiber reinforcing material and said weight bearing reinforcing structure; and
curing said molded thermosetting polymeric backing material (14) at a suitable temperature and sufficient time to allow hardening and cross-linking of the thermosetting polymeric material and bonding to said fiber reinforcing material and said non-finish side (21) of the polymeric shell (12) in order to permit demolding of the composite structure without damage.

11. A process for manufacturing a polymeric composite structure comprising:
forming a polymeric shell (12) having a finish (20) and non-finish side (21) to a suitable shape;
priming said polymeric shell (12) with a silane based coupler;
arranging said polymeric shell (12) within a molding cavity (36) with said non-finish side (21) covering a fiberous reinforcing means and weight bearing reinforcing structure (16) suitably arranged in the molding cavity;
introducing an uncured mixture of thermosetting polymeric backing material (14) and cross-linking promoter into said mold (36) at a sufficient pressure to force said polymeric backing material (14) to coat the non-finish side (21) of said shell and cover said fiber reinforcing material and said weight bearing reinforcing structure (16); and
curing said molded polymeric backing material (14) at a suitable temperature and sufficient time to allow hardening and cross-linking of the polymeric backing material (14) and bonding to said fiber reinforcing material and said non-finish side (21) of the polymeric shell (12) to permit demolding of the composite structure without damage.

12. The process for manufacturing a polymeric composite structure as recited in claim 10 or 11, wherein said silane based coupler comprises a silane based primer composition and a methylmethacrylate and solvent blend.

13. The process for manufacturing a polymeric composite structure as recited in claim 12, wherein said methylmethacrylate and solvent blend further comprises methylene chloride, styrene and water; and
wherein said silane based primer composition further comprises 3[2(vinyl benzylamino)ethylamino] propyltrimethoxy silane dissolved in toluene, butanol, 2-butoxy ethanol, and ethyl alcohol.

14. The process for manufacturing a polymeric composite structure as recited in claim 10, wherein said reinforcing of the non-finish side (21) includes spray-up and roll down of fibers selected from a group consisting of glass, ceramic, boron, carbon, graphite, woolastonite and aromatic polyamide, in a polyester resin mixture and curing said reinforced fiber resin layer prior to arranging said reinforced shell (12) into the mold (36).

15. The process for manufacturing a polymeric composite structure as recited in claim 10 or 11, wherein said weight bearing reinforcing structure (16) is selected from the group consisting of chip-board, particle-board, plywood, wooden plank, polymeric composites, inorganic weight bearing structures and combinations thereof.

16. The process for manufacturing a polymeric composite structure as recited in claim 10 or 11, wherein said thermosetting polymeric backing material (14) includes a mixture of rigid unsaturated polyester resin, flexible unsaturated polyester resin, curing promoter, a peroxide cross-linking promoter and a filler in a ratio from about 2:1 resin to filler up to about 1:30 resin to filler, but does not contain isocyanate.

17. The process for manufacturing a polymeric composite structure as recited in claim 16, wherein said filler is selected from the group consisting of calcium carbonate, aluminum trihydrate, glass spheres, ceramic, mica, talc, silica, sand, and mixtures thereof.

18. The process for manufacturing a polymeric composite structure as recited in claim 15, wherein said polymeric composite structure includes a floor and a deck section; and
wherein said arranging of the weight bearing reinforcing structure in the mold includes placing said reinforcing structure (16) below said floor and said deck section of the polymeric shell.

19. The process for manufacturing a polymeric composite structure as recited in claim 16, wherein said thermosetting polymeric resin material (14) further includes a foaming agent or reduce the density of said backing material.

20. The process for manufacturing a polymeric composite structure as recited in claim 10 or 11, wherein said thermosetting polymeric backing material (14) includes at least one component selected from the group comprising polyester, epoxy, acrylic, vinyl esters and blends thereof, but does not contain isocyanate.

21. The process for manufacturing a polymeric composite structure as recited in claim 10 or 11, wherein said composite structure has a configuration of a bathtub.

22. The process for manufacturing a polymeric composite structure as recited in claim 11, wherein said fiberous reinforcing means includes a mat of fibers which includes fibers selected from the group consisting of glass, ceramic, boron, carbon, graphite, woolastonite and aromatic polyamide.

23. The process for manufacturing a polymeric composite structure as recited in claim 22, wherein said fiber reinforcing means is prepared by performing a fiber and resin structure having a shape matching the non-finish side of said shell.

## Patentansprüche

1. Polymerverbundstruktur, die aufweist:
eine Polymerschalenschicht (12) mit einer bearbeiteten Seite (20) und einer unbearbeiteten Seite (21);
eine faserverstärkte Harzschicht, die durch einen Haftvermittler auf Silanbasis an die unbearbeitete Seite (21) der Polymerschalenschicht (12) anhaftet, und eine tragfähige Verstärkungsstruktur (16), die an die unbearbeitete Seite (21) der Polymerschalenschicht (12) und an die faserverstärkte Harzschicht anhaftet; und
eine geformte, vernetzte, hitzehärtbare Polymerverstärkungsschicht (14), welche die faserverstärkte Harzschicht und die tragfähige Verstärkungsstruktur (16) umgibt und mit der unbearbeiteten Seite (21) der Polymerschalenschicht (12) verbunden ist, wobei die hitzehärtbare Polymerverstärkungsschicht (14) mindestens eine Komponente aufweist, die aus der Gruppe ausgewählt ist, welche Polyester, Epoxid , Acryl-, Vinylester und deren Gemische aufweist, aber kein Isocyanat enthält.

2. Polymerverbundstruktur nach Anspruch 1, wobei der Haftvermittler auf Silanbasis eine Grundiermittelzusammensetzung auf Silanbasis und ein Gemisch aus Methacrylsäuremethylester und Lösungsmittel aufweist.

3. Polymerverbundstruktur nach Anspruch 2, wobei das Gemisch aus Methacrylsäure-methylester und Lösungsmittel Methylenchlorid, Styrol und Wasser aufweist; und
wobei die Grundiermittelzusammensetzung auf Silanbasis ferner 3-[2-(Vinylbenzylamino)ethylamino]propyltrimethoxysilan aufweist, das in Toluol, Butanol, 2-Butoxyethanol und Ethylalkohol gelöst ist.

4. Polymerverbundstruktur nach Anspruch 1, wobei die Polymerschalenschicht (12) ein Acrylpolymer aus Polymethacrylsäure-methylester ist.

5. Polymerverbundstruktur nach Anspruch 1, wobei die faserverstärkte Schicht eine Faserschicht aufweist, die aus der Gruppe ausgewählt ist, welche aus Glasfasern, Kohlenstoff, Keramik, Bor, Graphit, Woolastonit, aromatischem Polyamid und deren Mischungen besteht; und
wobei die tragfähige Verstärkungsstruktur (16) aus der Gruppe ausgewählt ist, welche aus Holz, einschließlich Preßspanplatte, plastgebundener Spanplatte, Sperrholz und Holzbohlen; Polymerverbundstoffen und anorganischen tragfähigen Strukturen besteht.

6. Polymerverbundstruktur nach Anspruch 5, wobei die faserverstärkte Schicht Glasfasern aufweist; und wobei die tragfähige Verstärkungsstruktur (16) Holzverstärkungsstrukturen (18) aufweist, die unter einem Bodenteil und einem Deckteil der Polymerschale angeordnet sind.

7. Polymerverbundstruktur nach Anspruch 1, wobei die geformte, vernetzte, hitzehärtbare Verstärkungsschicht (14) vor dem Aushärten ein starres ungesättigtes Polyesterharz, ein flexibles ungesättigtes Polyesterharz, einen Aushärtungsbeschleuniger, einen Peroxid-Vernetzungsbeschleuniger und einen Füllstoff in einem Harz-Füllstoff-Verhältnis von etwa 2:1 bis etwa 1:30 aufweist.

8. Polymerverbundstruktur nach Anspruch 7, wobei der Füllstoff aus der Gruppe ausgewählt ist, die aus Calciumcarbonat, Aluminiumtrihydrat, Glaskugeln, Sand, Keramik, Glimmer, Talkum, Siliciumdioxid und deren Gemischen besteht.

9. Polymerverbundstruktur nach Anspruch 1, welche die Gestalt einer Badewanne (10) aufweist.

10. Verfahren zur Herstellung einer Polymerverbundstruktur mit den folgenden Schritten:
Formen einer Polymerschale (12) mit einer bearbeiteten Seite (20) und einer unbearbeiteten Seite (21) in eine geeignete Gestalt;
Grundieren der unbearbeiteten Seite der Polymerschale (12) mit einem Haftvermittler auf Silanbasis;
Verstärken der unbearbeiteten Seite (21) der Polymerschale (12) mit einem harzhaltigen Gemisch aus Verstärkungsfasern;
Anordnen der verstärkten Polymerschale (12) in einer Form (36), wobei die unbearbeitete Seite eine tragfähige Verstärkungsstruktur (16) bedeckt, die unterhalb lasttragender Teile der Polymerschale (12) eingelegt ist;
Einbringen eines ungehärteten Gemischs aus ungesättigtem, hitzehärtbarem Polymerverstärkungsmaterial (14) und einem Vernetzungsbeschleuniger in die Form (36) unter einem ausreichenden Druck, damit das Verstärkungsmaterial die unbearbeitete Seite der Schale (12) beschichtet und das Faserverstärkungsmaterial sowie die tragfähige Verstärkungsstruktur bedeckt; und
Aushärten des geformten, hitzehärtbaren Polymerverstärkungsmaterials (14) bei einer geeigneten Temperatur und über eine ausreichende Zeit, damit der hitzehärtbare Polymerwerkstoff aushärten und vernetzen und sich mit dem Faserverstärkungsmaterial und der unbearbeiteten Seite (21) der Polymerschale (12) verbinden kann, um das Entformen der Verbundstruktur ohne Beschädigung zu ermöglichen.

11. Verfahren zur Herstellung einer Polymerverbundstruktur mit den folgenden Schritten:
Formen einer Polymerschale (12) mit einer bearbeiteten (20) und einer unbearbeiteten Seite (21) in eine geeignete Gestalt;
Grundieren der Polymerschale (12) mit einem Haftvermittler auf Silanbasis;
Anordnen der Polymerschale (12) innerhalb eines Formhohlraums (36), wobei die unbearbeitete Seite (21) ein Faserverstärkungsmittel und eine tragfähige Verstärkungsstruktur (16) bedeckt, die auf geeignete Weise in dem Formhohlraum angeordnet ist;
Einbringen eines ungehärteten Gemischs aus hitzehärtbarem Polymerverstärkungsmaterial (14) und einem Vernetzungsbeschleuniger in die Form (36) unter einem ausreichenden Druck, damit das Polymerverstärkungsmaterial (14)
die unbearbeitete Seite (21) der Schale beschichtet und das Faserverstärkungsmaterial und die tragfähige Verstärkungsstruktur (16) bedeckt; und
Aushärten des geformten Polymerverstärkungsmaterials (14) bei einer geeigneten Temperatur und über eine ausreichende Zeit, damit das Polymerverstärkungsmaterial (14) aushärten und vernetzen und sich mit dem Faserverstärkungsmaterial und der unbearbeiteten Seite (21) der Polymerschale (12) verbinden kann, um das Entformen der Verbundstruktur ohne Beschädigung zu ermöglichen.

12. Verfahren zur Herstellung einer Polymerverbundstruktur nach Anspruch 10 oder 11, wobei der Haftvermittler auf Silanbasis eine Grundiermittelzusammensetzung auf Silanbasis und ein Gemisch aus Methacrylsäure-methylester und Lösungsmittel aufweist.

13. Verfahren zur Herstellung einer Polymerverbundstruktur nach Anspruch 12, wobei das Gemisch aus Methacrylsäure-methylester und Lösungsmittel ferner Methylenchlorid, Styrol und Wasser aufweist; und
wobei die Grundiermittelzusammensetzung auf Silanbasis ferner 3-[2-(Vinylbenzylamino)ethylamino]propyltrimethoxysilan aufweist, das in Toluol, Butanol, 2-Butoxyethanol und Ethylalkohol gelöst ist.

14. Verfahren zur Herstellung einer Polymerverbundstruktur nach Anspruch 10, wobei die Verstärkung der unbearbeiteten Seite (21) das Aufspritzen und Auswalzen von Fasern, ausgewählt aus einer Gruppe, die aus Glas, Keramik, Bor, Kohlenstoff, Graphit, Woolastonit und aromatischem Polyamid besteht, in einem Polyesterharzgemisch und das Aushärten der faserverstärkten Harzschicht vor dem Einbringen der verstärkten Schale (12) in die Form (36) aufweist.

15. Verfahren zur Herstellung einer Polymerverbundstruktur nach Anspruch 10 oder 11, wobei die tragfähige Verstärkungsstruktur (16) aus der Gruppe ausgewählt ist, die aus Preßspanplatte, plastgebundener Spanplatte, Sperrholz, Holzbohle, Polymerverbundstoffen, anorganischen tragfähigen Strukturen und deren Kombinationen besteht.

16. Verfahren zur Herstellung einer Polymerverbundstruktur nach Anspruch 10 oder 11, wobei das hitzehärtbare Polymerverstärkungsmaterial (14) ein Gemisch aus starrem ungesättigtem Polyesterharz, flexiblem ungesättigtem Polyesterharz, einem Aushärtungsbeschleuniger, einem Peroxid-Vernetzungsbeschleuniger und einem Füllstoff in einem Harz-Füllstoff-Verhältnis von etwa 2:1 bis zu etwa 1:30 aufweist, aber kein Isocyanat enthält.

17. Verfahren zur Herstellung einer Polymerverbundstruktur nach Anspruch 16, wobei der Füllstoff aus der Gruppe ausgewählt ist, die aus Calciumcarbonat, Aluminiumtrihydrat, Glaskugeln, Keramik, Glimmer, Talkum, Siliciumdioxid, Sand und deren Mischungen besteht.

18. Verfahren zur Herstellung einer Polymerverbundstruktur nach Anspruch 15, wobei die Polymerverbundstruktur einen Boden- und einen Deckabschnitt aufweist; und
wobei das Anordnen der tragfähigen Verstärkungsstruktur in der Form das Einlegen der Verstärkungsstruktur (16) unter dem Boden- und dem Deckabschnitt der Polymerschale einschließt.

19. Verfahren zur Herstellung einer Polymerverbundstruktur nach Anspruch 16, wobei das hitzehärtbare polymere Harzmaterial (14) ferner einen Schaumbildner zur Verminderung der Dichte des Verstärkungsmaterials umfaßt.

20. Verfahren zur Herstellung einer Polymerverbundstruktur nach Anspruch 10 oder 11, wobei das hitzehärtbare Polymerverstärkungsmaterial (14) mindestens eine Komponente umfaßt, die aus der Gruppe ausgewählt ist, welche Polyester, Epoxid , Acryl-, Vinylester und deren Gemische aufweist, aber kein Isocyanat enthält.

21. Verfahren zur Herstellung einer Polymerverbundstruktur nach Anspruch 10 oder 11, wobei die Verbundstruktur die Gestalt einer Badewanne hat.

22. Verfahren zur Herstellung einer Polymerverbundstruktur nach Anspruch 11, wobei das Faserverstärkungsmittel ein Faservlies mit Fasern umfaßt, ausgewählt aus der Gruppe, die aus Glas, Keramik, Bor, Kohlenstoff, Graphit, Woolastonit und aromatischem Polyamid besteht.

23. Verfahren zur Herstellung einer Polymerverbundstruktur nach Anspruch 22, wobei das Faserverstärkungsmittel durch Formen einer Faser- und Harzstruktur hergestellt wird, die eine an die unbearbeitete Seite der Schale angepaßte Gestalt aufweist.

## Revendications

1. Structure composite polymérique comprenant :
une couche d'enveloppe polymérique (12) comportant une face de finissage (20) et une face sans finissage (21);
une couche de résine renforcée de fibres adhérant à la face non finie (21) de la couche d'enveloppe polymérique (12) par un agent de couplage à base de silane et une structure de renforcement porteuse de charge (16) adhérant à la face sans finissage (21) de la couche d'enveloppe polymérique (12) et à la couche de résine renforcée de fibres précitée; et
une couche de support polymérique thermodurcissable réticulée, moulée (14), entourant la couche de résine renforcée de fibres et la structure de renforcement porteuse de charge (16), qui est liée à la face sans finissage (21) de la couche d'enveloppe polymérique (12), la couche de support polymérique thermodurcissable (14) comprenant au moins un composant choisi dans le groupe comprenant les polyesters, époxy, acryliques, esters vinyliques et leurs mélanges mais ne contenant pas d'isocyanate.

2. Structure composite polymérique suivant la revendication 1, dans laquelle l'agent de couplage à base de silane comprend une composition d'accrochage à base de silane et un mélange de méthacrylate de méthyle et de solvant.

3. Structure composite polymérique suivant la revendication 2, dans laquelle le mélange de méthacrylate de méthyle et de solvant comprend du chlorure de méthylène, du styrène et de l'eau et dans laquelle la composition d'accrochage à base de silane comprend de plus du 3[2(vinyl benzylamino)éthylamino] propyltriméthoxy silane dissous dans du toluène, du butanol, du 2-butoxy éthanol et de l'alcool éthylique.

4. Structure composite polymérique suivant la revendication 1, dans laquelle la couche d'enveloppe polymérique (12) est un polymère acrylique de polyméthacrylate de méthyle.

5. Structure composite polymérique suivant la revendication 1, dans laquelle la couche renforcée de fibres comprend une couche de fibres choisies dans le groupe comprenant la fibre de verre, le carbone, la céramique, le bore, le graphite, la woolastonite, les polyamides aromatiques et leurs mélanges et dans laquelle la structure de renforcement porteuse de charge (16) est choisie dans le groupe comprenant le bois, notamment le carton gris, les panneaux d'agglomérés, le contre-plaqué et les planches en bois, les composites polymériques et les structures porteuses de charge inorganiques.

6. Structure composite polymérique suivant la revendication 5, dans laquelle la couche renforcée de fibres comprend de la fibre de verre et la structure de renforcement porteuse de charge (16) comprend des structures de renforcement en bois (18) positionnées en dessous d'une partie de fond et d'une partie en plate-forme de l'enveloppe polymérique précitée.

7. Structure composite polymérique suivant la revendication 1, dans laquelle la couche de support thermodurcissable réticulée, moulée (14), avant le durcissement comprend une résine de polyester insaturé rigide, une résine de polyester insaturé flexible, un promoteur de durcissement, un promoteur de réticulation peroxydique et une charge dans un rapport de résine à charge d'environ 2/1 jusqu'à environ un rapport de résine à charge de 1/30.

8. Structure composite polymérique suivant la revendication 7, dans laquelle la charge est choisie dans le groupe comprenant le carbonate de calcium, le trihydrate d'aluminium, les sphères de verre, le sable, la céramique, le mica, le talc, la silice et leurs mélanges.

9. Structure composite polymérique suivant la revendication 1, ayant la configuration d'une cuvette de bain (10).

10. Procédé de fabrication d'une structure composite polymérique, comprenant :
la formation d'une enveloppe polymérique (12) comportant une face de finissage (20) et une face sans finissage (21) à une forme appropriée;
l'application comme couche d'accrochage sur la face sans finissage de l'enveloppe polymérique (12) d'un agent de couplage à base de silane;
le renforcement de la face sans finissage (21) de l'enveloppe polymérique (12) au moyen d'un mélange résineux de fibres de renforcement;
l'agencement de l'enveloppe polymérique renforcée (12) dans un morne (36) avec la face sans finissage recouvrant une structure de renforcement porteuse de charge (16) placée en dessous de parties porteuses de charge de l'enveloppe polymérique (12);
l'introduction d'un mélange non durci de matière de support polymérique thermodurcissable insaturée (14) et de promoteur de réticulation dans le moule (36) à une pression suffisante pour amener la matière de support à revêtir la face sans finissage de l'enveloppe (12) et à recouvrir la matière de renforcement de fibres et la structure de renforcement porteuse de charge précitées; et
la cuisson de la matière de support polymérique thermodurcissable moulée (14) à une température appropriée et pendant une période de temps suffisante pour permettre le durcissement et la réticulation de la matière polymérique thermodurcissable et la liaison à la matière de renforcement de fibres et à la face sans finissage (21) de l'enveloppe polymérique (12) afin de permettre le démoulage de la structure composite sans endommagement.

11. Procédé de fabrication d'une structure composite polymérique, comprenant :
la formation d'une enveloppe polymérique (12) comportant une face de finissage (20) et sans finissage (21) à une forme appropriée;
l'application comme couche d'accrochage sur l'enveloppe polymérique (12) d'un agent de couplage à base de silane;
l'agencement de l'enveloppe polymérique (12) dans une cavité de moulage (36) avec la face sans finissage (21) recouvrant un moyen de renforcement fibreux et une structure de renforcement porteuse de charge (16) agencés de façon appropriée dans la cavité de moulage;
l'introduction d'un mélange non durci de matière de support polymérique thermodurcissable (14) et de promoteur de réticulation dans le moule (36) à une pression suffisante pour amener la matière de renforcement polymérique (14) à revêtir la face sans finissage (21) de l'enveloppe et à recouvrir la matière de renforcement de fibres et la structure de renforcement porteuse de charge (16); et
la cuisson de la matière de support polymérique moulée (14) à une température appropriée et pendant une période de temps suffisante pour permettre le durcissement et la réticulation de la matière de support polymérique (14) et la liaison à la matière de renforcement de fibres et à la face sans finissage (21) de l'enveloppe polymérique (12) pour permettre le démoulage de la structure composite sans endommagement.

12. Procédé de fabrication d'une structure composite polymérique suivant l'une ou l'autre des revendications 10 et 11, dans lequel l'agent de couplage à base de silane comprend une composition d'accrochage à base de silane et un mélange de méthacrylate de méthyle et de solvant.

13. Procédé de fabrication d'une structure composite polymérique suivant la revendication 12, dans laquelle le mélange de méthacrylate de méthyle et de solvant comprend de plus du chlorure de méthylène, du styrène et de l'eau et dans lequel la composition d'accrochage à base de silane comprend de plus du 3[2(vinyl benzylamino) éthylamino] propyltriméthoxy silane dissous dans du toluène, du butanol, du 2-butoxy éthanol et de l'alcool éthylique.

14. Procédé de fabrication d'une structure composite polymérique suivant la revendication 10, dans lequel le renforcement de la face sans finissage (21) comprend la pulvérisation et l'étalement au rouleau de fibres choisies dans le groupe comprenant le verre, la céramique, le bore, le carbone, le graphite, la woolastonite et les polyamides aromatiques, dans un mélange de résine de polyester et la cuisson de la couche de résine renforcée de fibres avant l'agencement de l'enveloppe renforcée (12) dans le moule (36).

15. Procédé de fabrication d'une structure composite polymérique suivant l'une ou l'autre des revendications 10 et 11, dans lequel la structure de renforcement porteuse de charge (16) est choisie dans le groupe comprenant le carton gris, les panneaux d'agglomérés, le contreplaqué, les planches en bois, les composites polymériques, les structures porteuses de charge inorganiques et leurs combinaisons.

16. Procédé de fabrication d'une structure composite polymérique suivant l'une ou l'autre des revendications 10 et 11, dans lequel la matière de support polymérique thermodurcissable (14), comprend un mélange de résine de polyester insaturé rigide, de résine de polyester insaturé flexible, de promoteur de cuisson, d'un promoteur de réticulation peroxydique et d'une charge dans un rapport de résine à charge d'environ 2/1 jusqu'à un rapport de résine à charge d'environ 1/30 mais qui ne contient pas d'isocyanate.

17. Procédé de fabrication d'une structure composite polymérique suivant la revendication 16, dans lequel la charge est choisie dans le groupe comprenant le carbonate de calcium, le trihydrate d'aluminium, les sphères de verre, la céramique, le mica, le talc, la silice, le sable et leurs mélanges.

18. Procédé de fabrication d'une structure composite polymérique suivant la revendication 15, dans lequel la structure composite polymérique comprend une section de fond et en plate-forme et dans lequel l'agencement de la structure de renforcement porteuse de charge dans le morne comprend le placement de la structure de renforcement (16) en dessous de la section de fond et de la section en plate-forme précitées de l'enveloppe polymérique.

19. Procédé de fabrication d'une structure composite polymérique suivant la revendication 16, dans lequel la matière de résine polymérique thermodurcissable (14) comprend de plus un agent moussant pour réduire la densité de la matière de support précitée.

20. Procédé de fabrication d'une structure composite polymérique suivant l'une ou l'autre des revendications 10 et 11, dans lequel la matière de support polymérique thermodurcissable (14) comprend au moins un composant choisi dans le groupe comprenant les polyesters, les époxy, les acryliques, les esters vinyliques et leurs mélanges mais qui ne contient pas d'isocyanate.

21. Procédé de fabrication d'une structure composite polymérique suivant l'une ou l'autre des revendications 10 et 11, dans lequel la structure composite a la configuration d'une cuvette de bain.

22. Procédé de fabrication d'une structure composite polymérique suivant la revendication 11, dans lequel le moyen de renforcement fibreux comprend une couche de fibres qui comprend des fibres choisies dans le groupe comprenant le verre, la céramique, le bore, le carbone, le graphite, la woolastonite et les polyamides aromatiques.

23. Procédé de fabrication d'une structure composite polymérique suivant la revendication 22, dans lequel le moyen de renforcement de fibres est préparé en réalisant une structure de fibres et de résine ayant une forme correspondant à la face sans finissage de l'enveloppe précitée.
